# EUROPEAN PATENT SPECIFICATION

(11) **EP 0 819 695 B1**
(45) Date of publication and mention of the grant of the patent: **09.04.2003**
(21) Application number: 97111446.7
(22) Date of filing: 07.07.1997
(51) Int. Cl.: C07F 17/00

(54) **Process for modifying the rac/meso ratio in a matallocene compound**
Verfahren zur Modifikation von die Rac/Meso-Verhältnis einer Metallocenverbindung
Procédé pour la modification du rapport rac/meso d'un composé metallocène

(30) Priority: 16.07.1996 EP 96202011
(43) Date of publication of application: 21.01.1998
(73) Proprietor: Basell Polyolefine GmbH, 50389 Wesseling (DE)
(72) Inventor: Resconi, Luigi, 44100 Ferrara (IT); Balboni, Davide, 44100 Ferrara (IT)
(74) Representative: Colucci, Giuseppe

(56) References cited:
- WO-A-96/19488
- DE-A- 19 525 184

## Description

The present invention relates to a process for the modification of the rac/meso ratio of a rac/meso mixture in a stereorigid metallocene compound.

Stereorigid metallocene compounds having two substituted cyclopentadienyl ligands joined by means of a bridging group which gives stereo-rigidity to the molecule are known to be stereospecific catalyst components for the preparation of isotactic polyolefins. These metallocenes can exist in two configurations, that is the racemic and the meso isomeric form. As the chiral racemic form only is stereospecific, the meso form is generally removed by separation from the rac/meso mixtures obtained from the metallocene synthesis.

Thus, for example, in U.S patent No. 4.769.510 it is described the use of rac-ethylene-bis(indenyl)zirconium dichloride and of rac-ethylene-bis(4,5,6,7-tetrahydroindenyl)-zirconium dichloride in combination with methylalumoxane for the preparation of isotactic polypropylene.

As regards the stereorigid metallocene compounds of the above type in their meso isomeric form, in EP-A-643,078 they are used in catalyst systems for the preparation of high molecular weight ethylene polymers.

Inasmuch as the methods for the preparation of the above metallocene compounds generally give a rac/meso mixture, both the racemic and the meso isomeric forms have to be separated from the corresponding undesired form. This is generally done by separation methods such as, for example, fractionated crystallization and extraction with solvents, which are often long, impractical and expensive. Moreover, the desired isomer is not always achievable with a high purity.

WO 95/35333 describes a process for the preparation of ethylene polymers having a broad molecular weight distribution by carrying out the polymerization reaction in the presence of a catalyst comprising a mixture of the racemic and meso isomers of a stereorigid metallocene compound and at least one co-catalyst capable of activating both the racemic form and the meso form of the metallocene compound. Different rac/meso ratios have been used in the working examples.

It is thus highly desirable to be able to prepare stereorigid metallocenes in their pure racemic or meso isomeric form, or in a rac/meso mixture with a fixed rac/meso ratio, without resorting to unpractical separation steps of the undesired isomer.

It has now unexpectedly been found that it is possible to selectively decompose one of the isomers of bridged chiral metallocenes in the presence of compounds having either acidic hydrogens or reactive halogen atoms.

Therefore, according to a first aspect, the present invention provides a process for the modification of the rac/meso ratio in a mixture of racemic and meso isomeric form of a stereorigid, bridged metallocene compound of a transition metal selected from those belonging to groups 3, 4, 5 or 6 or to the lanthanides or the actinides in the Periodic Table of the Elements (new IUPAC version), said process comprising contacting said mixture with a decomposition agent selected from the compounds having either an acidic hydrogen atom or a reactive halogen atom for a time sufficient to decompose at least part of one of the isomeric forms.

Depending on the type and concentration of the decomposition agent employed, as well as on the conditions in which the process is carried out, it is possible to control the degree of decomposition of the undesired isomer and, consequently, to prepare rac/meso mixtures enriched in one of the isomers or to prepare the desired isomer substantially free of the undesired isomer.

Inasmuch as the preparation of a stereorigid metallocene compound substantially free of one of its racemic or meso isomeric forms is particularly desirable, in an embodiment of the invention the conditions of the process are selected such that substantially all the undesired isomer is decomposed.

Therefore, according to another aspect, the present invention provides a process for the preparation of the racemic or meso isomeric form of a stereorigid, bridged metallocene compound of a transition metal selected from those belonging to groups 3, 4, 5 or 6 or to the lanthanides or the actinides in the Periodic Table of the Elements (new IUPAC version), said process comprising contacting a rac\meso isomeric mixture of the metallocene with a decomposition agent selected from the compounds having either an acidic hydrogen atom or a reactive halogen atom for a time sufficient to decompose substantially all the undesired isomer.

Non limitative examples of compounds having acidic hydrogen atoms which can be used in the process of the present invention are:
- water,
- alcohols such as methanol, ethanol arid the like,
- organic and inorganic acids such as hydrochloric acid, acetic acid, p-toluen-sulphonic acid, HB(phenyl)₄,
- primary or secondary amines of the formula RNH₂ or R₂NH wherein R is an alkyl or aryl group such as diethylamine and the like,
- quaternary ammonium salts of the formula (RₚNH⁺₄₋ₚ)_{q}(X^{q-}), wherein p is 1, 2 or 3, n is 1 or 2, R is an alkyl group and X is a counteranion such as an halogen atom, a SO₄²⁻, HSO₄⁻, CO₃²⁻, HCO₃⁻ or B(phenyl)₄⁻ group.

Non limitative examples of compounds having reactive halogen atoms which can be used in the process of the present invention are the chlorides such as those of the formula R'₃SiCl, R'₃GeCl or R'₃SnCl wherein R' is an alkyl group.

In order to reduce the time required for the decomposition, the above described decomposition agents are generally used in a molar ratio with the metal of the undesired metallocene isomer higher than 1:1.

A class of stereorigid, bridged metallocene compounds which are normally obtained as a rac/meso mixture and can thus be subjected to the process of the present invention are those of the formula (I): 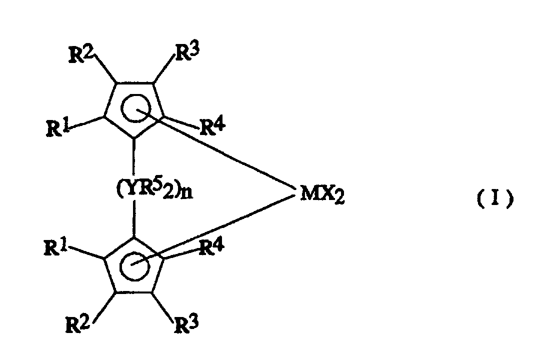 wherein M is a metal selected from Ti, Zr and Hf;
the X substituents, same or different, are hydrogen atoms, halogen atoms or R, OR, SR, NR₂ or PR₂ groups, wherein the R substituents are C₁-C₂₀-alkyl, C₃-C₂₀-cycloalkyl, C₂-C₂₀-alkenyl, C₆-C₂₀-aryl, C₇-C₂₀-alkylaryl or C₇-C₂₀-arylalkyl radicals which can contain silicon or germanium atoms;
on each cyclopentadienyl group, the R¹, R², R³ and R⁴ substituents, same or different, are C₁-C₂₀ alkyl radicals, C₃-C₂₀ cycloalkyl radicals, C₂-C₂₀ alkenyl radicals, C₆-C₂₀ aryl radicals, C₇-C₂₀ alkylaryl radicals or C₇-C₂₀ arylalkyl radicals and can contain Si or Ge atoms, and moreover two of the R¹, R², R³ and R⁴ substituents adjacent on the same cyclopentadienyl ring can form a cycle comprising from 5 to 8 carbon atoms, with the proviso that, in at least one cyclopentadienyl group, R¹ is different from R⁴ or R² is different from R³;
Y is a carbon, silicon or germanium atom;
the R⁵ substituents, same or different, are hydrogen atoms, C₁-C₂₀ alkyl radicals, C₃-C₂₀ cycloalkyl radicals, C₂-C₂₀ alkenyl radicals, C₆-C₂₀ aryl radicals, C₇-C₂₀ alkylaryl radicals or C₇-C₂₀ arylalkyl radicals, and moreover two substituents R⁵ can form a cycle comprising from 4 to 8 carbon atoms;
n is an integer comprised between 1 and 4, preferably being 1 or 2.

A particularly interesting class of stereorigid, bridged metallocene compounds are the bridged bis-indenyl compounds of the formula (II): 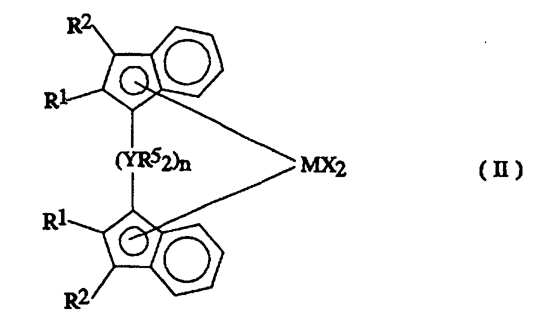 and the corresponding bis-4,5,6,7-tetrahydroindenyl compounds wherein R¹, R², R⁵, Y, n, M and X are defined as above, and the six-carbon-atom rings of the indenyl ligands can optionally be substituted.

Preferred metallocene compounds of the formulas (I) or (II) are those wherein M is Zr, the X substituents are chlorine atoms or methyl groups, the (YR⁵₂)ₙ bridging group is a CR⁵₂, SiR⁵₂ or (CR⁵₂)₂ group, more preferably a CH₂, C(CH₃)₂, Si(CH₃)₂, or (CH₂)₂ group.

A particularly interesting metallocene compound is the ethylenebis(4,7-dimethyl-indenyl)zirconium dichloride which can be easily obtained in its pure meso isomeric form with the process of the present invention.

Therefore, according to a further aspect, the present invention provides a process for the preparation of ethylenebis(4,7-dimethyl-indenyl)zirconium dichloride in its substantially pure meso isomeric form, said process comprising contacting a rac\meso isomeric mixture of said metallocene with a decomposition agent selected from the compounds having either an acidic hydrogen atom or a reactive halogen atom for a time sufficient to decompose substantially all the racemic isomer.

A particularly convenient method for the synthesis of bridged metallocene compounds is described in European Patent Application EP 0 722 950. This method goes through the synthesis of intermediate silyl-, germyl- or stannyl- substituted ligands which can be prepared in their racemic and meso forms, and then can be selectively transformed into the corresponding metallocenes by reaction with a transition metal compound of formula MX₄, wherein M is a titanium, zirconium or hafnium atom and X is an halogen atom.

It has been observed that if the rac/meso mixture of the silyl-, germyl- or stannyl- substituted ligand is allowed to react for prolonged times with the transition metal compound, one of the isomers is decomposed.

Therefore, according to a particularly suitable embodiment of the present invention, the decomposition agent is a silyl-, germyl- or stannyl-chloride of the formula R'₃SiCl, R'₃GeCl or R'₃SnCl, wherein R' is an alkyl group, which is generated by the reaction of a silyl-, germyl- or stannyl- substituted ligand of the target metallocene with a transition metal compound of formula MX₄ wherein M is a titanium, zirconium or hafnium atom, preferably a zirconium atom, and X is an halogen atom, preferably a chlorine atom.

The metallocene compounds obtainable with the process of the present invention are useable, in combination with a cocatalyst, in the polymerization of olefins.

The following examples are given for illustrative purposes and do not limit the invention.

### CHARACTERIZATIONS

The ¹H-NMR analyses were carried out on a Bruker 200 MHz instrument, using CDCl₃ as a solvent, at room temperature.

All the operations were carried out in a dry nitrogen atmosphere, using the conventional techniques for the handling of compounds which are sensitive to air.
THF = tetrahydrofuran
Et₂O = ethyl ether

### Synthesis of 1,2-bis(1-trimethylsilyl-4,7-dimethyl-indenyl) ethane [EBDMI(TMS)₂]

103.8 g (331 mmol) of 1,2-bis(4,7-dimethyl-indenyl)ethane (Boulder, mixture of double bonds positional isomers) were slurred in 680 mL of THF in a 1 L flask equipped with stirring bar. This suspension was added in small aliguots over 30 minutes at room temperature in a 2 L flask equipped with reflux condenser, thermometer and mechanical stirrer, containing 29.48 g of KH (735 mmol) and 205 mL of THF. The reaction was slightly exothermic (T max. 43 °C) with evolution of hydrogen. At the end of the addition the so obtained suspension was stirred for 2 h, obtaining a dark green solution. In a second 2 L flask equipped with thermometer, mechanical stirrer and dropping funnel were placed 93.2 mL of Me₃SiCl (734 mmol) and 210 mL of THF. The dark green solution of the potassium salt was added dropwise (2 h, slightly exothermic reaction, T max. 30 °C) and at the end of the addition the mixture was stirred for 44 h, obtaining a brown-orange milk. The reaction was monitored by NMR (40 mg dissolved in CDCl₃) and GC. After 16 h the reaction was complete. After 44 h the mixture was treated with water (200 mL) while stirring, and then NaCl to induce phase separation. The organic layer was dried over Na₂SO₄, filtered and brought to dryness. 142.8 g of a light brown solid was obtained (yield 94.3%).

### EXAMPLE 1 (Comparison)

### Synthesis of rac/meso -ethylene-bis(4,7-dimethyl-indenyl) zirconium dichloride

0.908 g of ZrCl₄ (PM 233.03 g/mol, 3.9 mmol), 90 mL of CH₂Cl₂ and 1.787 g of EBDMI(TMS)₂ (PM 458.5, 3.9 mmol) were placed in a 100 mL flask equipped with stirring bar. The dark brown suspension was stirred for 2 h, then the reaction stopped by removing all volatiles in vacuo: the brown powder was placed in a frit and washed several times with Et₂O until the Et₂O was light yellow (100 mL) then with CH₂Cl₂ and finally dried in vacuo. 0.638 g (35 %) of yellow-orange powder were obtained: ¹H NMR shows the presence of a mixture of the two isomers of EBDMIZrCl₂ (rac:meso = 45:55). The product was chemically pure.

### EXAMPLE 2

### Synthesis of meso -ethylene-bis(4,7-dimethyl-indenyl)zirconium dichloride

0.75 g of ZrCl₄ (PM 233.03 g/mol, 3.22 mmol), 85 mL of CH₂Cl₂ and 1.47 g of EBDMI(TMS)₂ (PM 458.5, 3.22 mmol) were charged in a 100 mL flask: a dark brown suspension was obtained which was stirred for 22 h at room temperature. 2 mL aliquots were taken out after 4 and 10 h. The aliquots were dried and analyzed by ¹H NMR. After 4 h the reaction was completed (all ligand consumed), with formation of a ca. 1:1 rac/meso with notable decomposition. After 10 h the racemic isomer was diminished, and decomposition increased. After 22 h the reaction was stopped by removing all volatiles in vacuo. The brown powder was transferred on a frit and washed with Et₂O (5×20 mL). After drying a yellow-green powder was obtained (0.364 g, 24 %) which analyzes (¹H NMR) as meso-EBDMIZrCl₂ (≥ 98%).

### EXAMPLE 3

### Synthesis of meso-ethylene-bis(4,7-dimethyl-indenyl)zirconium dichloride

5.6 g of ZrCl₄ (PM 233.03 g/mol, 24 mmol), 220 mL of CH₂Cl₂ and 11 g of EBDMI(TMS)₂ (PM 458.5, 24 mmol) were charged in a 250 mL flask equipped with stirring bar. A dark brown suspension was obtained, which was stirred at room temperature for 23 h. The reaction was stopped by filtration, and the residue was extracted with CH₂Cl₂ until colourless (the insoluble residue was discarded). The CH₂Cl₂ solutions were combined and brought to dryness under vacuum, yielding a brown powder which was placed in a frit and washed several times with Et₂O until the Et₂O was colourless (200 mL). A dark yellow powder was obtained. A fraction of it was washed with CH₂Cl₂: ¹H NMR analysis revealed the presence of pure meso-EBDMIZrCl₂ (the rac isomer being present in traces). The rest of the product contained, besides traces of the rac isomer, also some organic impurities: Et₂O alone was not enough to purify the product. Total yield 2.67 g, 24 %. The meso-EBDMIZrCl₂ only was obtained, as a lemon yellow powder.

### EXAMPLE 4

### Synthesis of meso -ethylene-bis(4,7-dimethyl-indenyl)zirconium dichloride

1.53 g of ZrCl₄ (PM 233.03 g/mol, 6.54 mmol), 100 mL of CH₂Cl₂ and 3 g of EBDMI(TMS)₂ (PM 458.5, 6.54 mmol) were placed in a 250 mL flask equipped with stirring bar. The dark brown mixture was stirred 23 h at room temperature. The reaction was stopped by removing the volatiles under vacuum: the brown powder was placed in a frit and washed several times with Et₂O until the Et₂O was colourless (100 mL). A yellow-green powder (0.7 g, 23 %) was obtained, which contained meso-EBDMIZrCl₂ (rac isomer traces) and organic impurities.

### EXAMPLE 5

### Meso-enrichment of a 1:1 rac/meso-mixture of ethylene-bis(4,7-dimethyl-indenyl)zirconium dichloride with H₂O

0.25 g of a 1:1 rac/meso mixture of ethylene-bis(4,7-dimethyl-indenyl)zirconium dichloride were dissolved in 55 mL of THF in a 50 mL Schlenk tube under nitrogen, 47 microliters of water were added with a syringe (Zr/H₂O = 5 molar), and the solution was stirred for 4 hours. Half of the solution was taken out, dried at 30 °C for 5 hours. The solid product was analyzed by ¹H NMR (CDCl3, 200 Mhz): meso/rac ratio = 90:10. The rest of the solution was stirred for a total of 24 hours, and analyzed in the same way: meso/rac ratio = 100:0.

### EXAMPLE 6

### Meso-enrichment of a 1:1 rac/meso-mixture of ethylene-bis(4,7-dimethyl-indenyl)zirconium dichloride with CH₃OH

0.25 g of a 1:1 rac/meso mixture of ethylene-bis(4,7-dimethyl-indenyl)zirconium dichloride were dissolved in 55 mL of CH₂Cl₂ in a 50 mL Schlenk tube under nitrogen, methanol was added with a syringe (Zr/CH₃OH = 5 molar), and the solution was stirred for 4 hours. Half of the solution was taken out, dried at 30 °C for 5 hours. The solid product was analyzed by ¹H NMR (CDCl3, 200 Mhz): meso/rac ratio = 60:40. The rest of the solution was stirred for a total of 24 hours, and analyzed in the same way: meso/rac ratio = 60:40.

### EXAMPLE 7

### Meso-enrichment of a 1:1 rac/meso-mixture of ethylene-bis(4,7-dimethyl-indenyl)zirconium dichloride with (CH₃)₃SiCl

0.25 g of a 1:1 rac/meso mixture of ethylene-bis(4,7-dimethyl-indenyl)zirconium dichloride were dissolved in 55 mL of CH₂Cl₂ in a 50 mL Schlenk tube under nitrogen, trimethylchlorosilane was added with a syringe (Zr/(CH₃)₃SiCl = 5 molar), and the solution was stirred for 24 hours, and analyzed by ¹H NMR (CDCl3, 200 Mhz): meso/rac ratio = 2:1.

## Claims

1. A process for the modification of the rac/meso ratio in a mixture of racemic and meso isomeric form of a stereorigid, bridged metallocene compound of a transition metal selected from those belonging to groups 3, 4, 5 or 6 or to the lanthanides or the actinides in the Periodic Table of the Elements (new IUPAC version), said process comprising contacting said mixture with a decomposition agent selected from the compounds having either an acidic hydrogen atom or a reactive halogen atom for a time sufficient to decompose at least part of one of the isomeric forms.

2. A process for the preparation of the racemic or meso isomeric form of a stereorigid, bridged metallocene compound of a transition metal selected from those belonging to groups 3, 4, 5 or 6 or to the lanthanides or the actinides in the Periodic Table of the Elements (new IUPAC version), said process comprising contacting a rac\meso isomeric mixture of the metallocene with a decomposition agent selected from the compounds having either an acidic hydrogen atom or a reactive halogen atom for a time sufficient to decompose substantially all the undesired isomer.

3. The process according to any of claims 1 or 2, wherein the compound having an acidic hydrogen atom is selected between:
- water,
- alcohols
- organic and inorganic acids
- primary or secondary amines of the formula RNH₂ or R₂NH wherein R is an alkyl or aryl group
- quaternary ammonium salts of the formula (RₚNH⁺₄₋ₚ)_{q}(X^{q-}), wherein p is 1, 2 or 3, n is 1 or 2, R is an alkyl group and X is a counteranion such as an halogen atom, a SO₄²⁻, HSO₄⁻, CO₃²⁻, HCO₃⁻ or B(phenyl)₄⁻ group.

4. The process according to any of claims 1 or 2, wherein the compound having a reactive halogen atom is selected from the chlorides of the formula R'₃SiCl, R'₃GeCl or R'₃SnCl wherein R' is an alkyl group.

5. The process according to any of claims 1 or 2, wherein the decomposition agent is used in a molar ratio with the metal of the undesired metallocene isomer higher than 1:1.

6. The process according to any of claims 1 or 2, wherein the metallocene compound is selected between those of the formula (I): 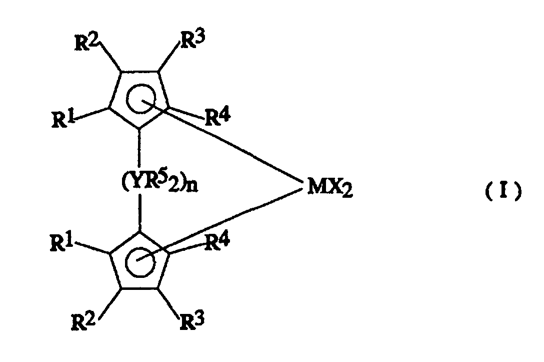 wherein M is a metal selected from Ti, Zr and Hf;
the X substituents, same or different, are hydrogen atoms, halogen atoms or R, OR, SR, NR₂ or PR₂ groups, wherein the R substituents are C₁-C₂₀-alkyl, C₃-C₂₀-cycloalkyl, C₂-C₂₀-alkenyl, C₆-C₂₀-aryl, C₇-C₂₀-alkylaryl or C₇-C₂₀-arylalkyl radicals which can contain silicon or germanium atoms;
on each cyclopentadienyl group, the R¹, R², R³ and R⁴ substituents, same or different, are C₁-C₂₀ alkyl radicals, C₃-C₂₀ cycloalkyl radicals, C₂-C₂₀ alkenyl radicals, C₆-C₂₀ aryl radicals, C₇-C₂₀ alkylaryl radicals or C₇-C₂₀ arylalkyl radicals and can contain Si or Ge atoms, and moreover two of the R¹, R², R³ and R⁴ substituents adjacent on the same cyclopentadienyl ring can form a cycle comprising from 5 to 8 carbon atoms, with the proviso that, in at least one cyclopentadienyl group, R¹ is different from R⁴ or R² is different from R³;
Y is a carbon, silicon or germanium atom;
the R⁵ substituents, same or different, are hydrogen atoms, C₁-C₂₀ alkyl radicals, C₃-C₂₀ cycloalkyl radicals, C₂-C₂₀ alkenyl radicals, C₆-C₂₀ aryl radicals, C₇-C₂₀ alkylaryl radicals or C₇-C₂₀ arylalkyl radicals, and moreover two substituents R⁵ can form a cycle comprising from 4 to 8 carbon atoms;
n is an integer comprised between 1 and 4, preferably being 1 or 2.

7. The process according to claim 6, wherein the metallocene compound is selected between those of the formula (II): 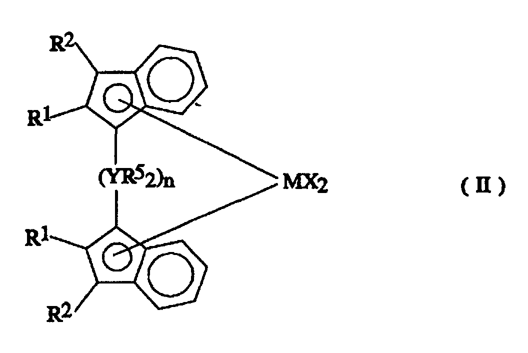 and the corresponding bis-4,5,6,7-tetrahydroindenyl compounds wherein R¹, R², R⁵, Y, n, M and X are defined as in claim 6, and the six-carbon-atom rings of the indenyl ligands can optionally be substituted.

8. The process according to any of claims 6 or 7, wherein in the metallocene compounds of the formulas (I) or (II) M is Zr, the X substituents are chlorine atoms or methyl groups, the (YR⁵₂)ₙ bridging group is a CR⁵₂, SiR⁵₂ or (CR⁵₂)₂ group, preferably a CH₂, C(CH₃)₂, Si(CH₃)₂, or (CH₂)₂ group.

9. A process for the preparation of ethylenebis(4,7-dimethyl-indenyl)zirconium dichloride in its substantially pure meso isomeric form, said process comprising contacting a rac\meso isomeric mixture of said metallocene with a decomposition agent selected from the compounds having either an acidic hydrogen atom or a reactive halogen atom for a time sufficient to decompose substantially all the racemic isomer.

10. The process according to any of the preceeding claims, wherein the decomposition agent is a silyl-, germyl- or stannyl-chloride of the formula R'₃SiCl, R'₃GeCl or R'₃SnCl, wherein R' is an alkyl group, which is generated by the reaction of a silyl-, germyl- or stannyl-substituted ligand of the target metallocene with a transition metal compound of formula MX₄ wherein M is a titanium, zirconium or hafnium atom, preferably a zirconium atom, and X is an halogen atom, preferably a chlorine atom.

## Patentansprüche

1. Verfahren zur Modifizierung des rac/meso-Verhältnisses in einem Gemisch von racemischer und meso-Isomeren-Form einer stereorigiden verbrückten Metallocenverbindung eines Übergangsmetalls, ausgewählt aus jenen, die zu Gruppen 3, 4, 5 oder 6 oder zu den Lanthaniden oder den Actiniden des Periodensystems der Elemente (neue IUPAC-Version) gehören, wobei das Verfahren In-Kontakt-Bringen des Gemisches mit einem Zersetzungsmittel, ausgewählt aus den Verbindungen mit entweder einem sauren Wasserstoffatom oder einem reaktiven Halogenatom, für einen zum Zersetzen von mindestens einem Teil von einer der isomeren Formen ausreichenden Zeitraum umfasst.

2. Verfahren zur Herstellung der racemischen oder meso-Isomeren-Form einer stereorigiden verbrückten Metallocenverbindung eines Übergangsmetalls, ausgewählt aus jenen, die zu Gruppen 3, 4, 5 oder 6 oder zu den Lanthaniden oder den Actiniden des Periodensystems der Elemente (neue IUPAC-Version) gehören, wobei das Verfahren In-Kontakt-Bringen eines rac/meso-Isomerengemisches des Metallocens mit einem Zersetzungsmittel, ausgewählt aus den Verbindungen mit entweder einem sauren Wasserstoffatom oder einem reaktiven Halogenatom, für einen ausreichenden Zeitraum zum Zersetzen im Wesentlichen des gesamten unerwünschten Isomers umfasst.

3. Verfahren nach einem der Ansprüche 1 oder 2, wobei die Verbindung mit einem sauren Wasserstoffatom ausgewählt ist, zwischen:
- Wasser,
- Alkoholen,
- organischen und anorganischen Säuren,
- primären oder sekundären Aminen der Formel RNH₂ oder R₂NH, worin R eine Alkyl- oder Arylgruppe darstellt,
- quaternären Ammoniumsalzen der Formel (RₚNH⁺₄₋ₚ)_{q}(x^{q-}), worin p 1, 2 oder 3 ist, n 1 oder 2 ist, R eine Alkylgruppe darstellt und X ein Gegenanion, wie ein Halogenatom, eine Gruppe SO₄²⁻, HSO₄⁻, CO₃²⁻, HCO₃⁻ oder B(Phenyl)₄⁻darstellt.

4. Verfahren nach einem der Ansprüche 1 oder 2, wobei die Verbindung mit dem reaktiven Halogenatom ausgewählt ist aus den Chloriden der Formel R'₃SiCl, R'₃GeCl oder R'₃SnCl, worin R' eine Alkylgruppe darstellt.

5. Verfahren nach einem der Ansprüche 1 oder 2, wobei das Zersetzungsmittel mit dem Metall des unerwünschten Metallocenisomers in einem Molverhältnis höher als 1:1 vorliegt.

6. Verfahren nach einem der Ansprüche 1 oder 2, wobei die Metallocenverbindung ausgewählt ist zwischen jenen der Formel (I): 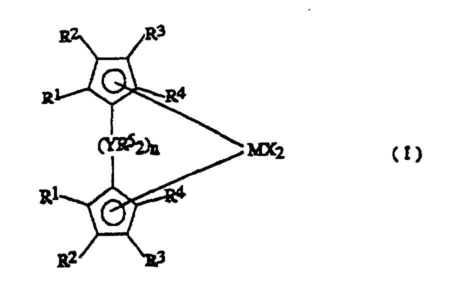 worin M ein Metall, ausgewählt aus Ti, Zr und Hf, darstellt;
die Substituenten X gleich oder verschieden Wasserstoffatome, Halogenatome oder Gruppen R, OR, SR, NR₂ oder PR₂ darstellen, worin die Substituenten R C₁-C₂₀-Alkyl-, C₃-C₂₀-Cycloalkyl-, C₂-C₂₀-Alkenyl-, C₆-C₂₀-Aryl-, C₇-C₂₀-Alkylaryloder C₇-C₂₀-Arylalkylreste, die Silizium- oder Germaniumatome enthalten können, darstellen,
an jeder Cyclopentadienylgruppe die Substituenten R¹, R², R³ und R⁴ gleich oder verschieden C₁-C₂₀-Alkylreste, C₃-C₂₀-Cycloalkylreste, C₂-C₂₀-Alkenylreste, C₆-C₂₀-Arylreste, C₇-C₂₀-Alkylarylreste oder C₇-C₂₀-Arylalkylreste darstellen und Sioder Ge-Atome enthalten können und darüber hinaus zwei der am gleichen Cyclopentadienylring benachbarten Substituenten R¹, R², R³ und R⁴ einen 5-8 Kohlenstoffatome umfassenden Cyclus bilden können, mit der Maßgabe, dass in mindestens einer Cyclopentadienylgruppe R¹ von R⁴ verschieden ist oder R² von R³ verschieden ist;
Y ein Kohlenstoff-, Silizium- oder Germaniumatom darstellt;
die Substituenten R⁵ gleich oder verschieden Wasserstoffatome, C₁-C₂₀-Alkylreste, C₃-C₂₀-Cycloalkylreste, C₂-C₂₀-Alkenylreste, C₆-C₂₀-Arylreste, C₇-C₂₀-Alkylarylreste oder C₇-C₂₀-Arylalkylreste darstellen und darüber hinaus 2 Substituenten R⁵ einen Cyclus, umfassend 4 bis 8 Kohlenstoffatome, bilden können;
n eine ganze Zahl umfasst zwischen 1 und 4, vorzugsweise 1 oder 2, ist.

7. Verfahren nach Anspruch 6, wobei die Metallocenverbindung zwischen jenen der Formel (II) : 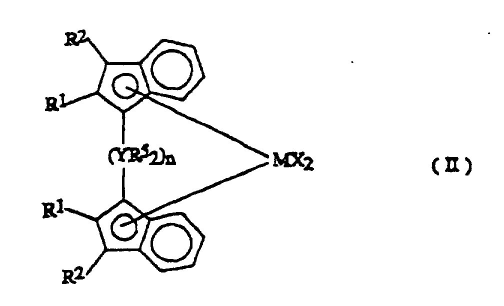 und den entsprechenden Bis-4,5,6,7-tetrahydroindenylverbindungen, worin R¹, R², R⁵, Y, n, M und X wie in Anspruch 6 definiert sind, und die Sechs-Kohlenstoffatom-Ringe der Indenylliganden gegebenenfalls substituiert sein können, ausgewählt ist.

8. Verfahren nach einem der Ansprüche 6 oder 7, wobei in den Metallocenverbindungen der Formeln (I) oder (II) M Zr darstellt, die Substituenten X Chloratome oder Methylgruppen darstellen, die Brückengruppe (YR⁵₂)ₙ eine Gruppe CR⁵₂, SiR⁵₂ oder (CR⁵₂)₂, vorzugsweise eine Gruppe CH₂, C(CH₃)₂, Si(CH₃)₂ oder (CH₂)₂, darstellt.

9. Verfahren zur Herstellung von Ethylenbis(4,7-dimethyl-indenyl)zirkoniumdichlorid in im Wesentlichen seiner reinen meso-Isomeren-Form, wobei das Verfahren In-Kontakt-Bringen eines rac/meso-Isomerengemisches des Metallocens mit einem Zersetzungsmittel, ausgewählt aus Verbindungen mit entweder einem sauren Wasserstoffatom oder einem reaktiven Halogenatom, für einen zum Zersetzen im Wesentlichen des gesamten racemischen Isomers ausreichenden Zeitraum umfasst.

10. Verfahren nach einem der vorangehenden Ansprüche, wobei das Zersetzungsmittel ein Silyl-, Germyl- oder Stannylchlorid der Formel R'₃SiCl, R'₃GeCl oder R'₃SnCl ist, worin R' eine Alkylgruppe darstellt, die durch die Reaktion eines Silyl-, Germyl- oder Stannyl-substituierten Liganden des Zielmetallocens mit einer Übergangsmetallverbindung der Formel MX₄, worin M ein Titan-, Zirkonium- oder Hafniumatom, vorzugsweise ein Zirkoniumatom, darstellt und X ein Halogenatom, vorzugsweise ein Chloratom, darstellt, erzeugt wird.

## Revendications

1. Procédé pour la modification du rapport rac/méso dans un mélange de formes isomères racémique et méso d'un composé métallocène ponté stéréorigide d'un métal de transition choisi parmi ceux qui appartiennent aux groupes 3, 4, 5 ou 6 ou aux lanthanides ou aux actinides dans le Tableau Périodique des Eléments (nouvelle version IUPAC), ledit procédé comprenant la mise en contact dudit mélange avec un agent de décomposition choisi parmi les composés ayant soit un atome d'hydrogène acide, soit un atome d'halogène réactif pendant un temps suffisant pour décomposer au moins une partie de l'une des formes isomères.

2. Procédé pour la préparation de la forme isomère racémique ou méso d'un composé métallocène ponté stéréorigide d'un métal de transition choisi parmi ceux qui appartiennent aux groupes 3, 4, 5 ou 6 ou aux lanthanides ou aux actinides dans le Tableau Périodique des Eléments (nouvelle version IUPAC), ledit procédé comprenant la mise en contact d'un mélange isomère rac/méso du métallocène avec un agent de décomposition choisi parmi les composés ayant soit un atome d'hydrogène acide, soit un atome d'halogène réactif pendant un temps suffisant pour décomposer substantiellement la totalité de l'isomère indésiré.

3. Procédé suivant l'une quelconque des revendications 1 ou 2, dans lequel le composé ayant un atome d'hydrogène acide est choisi parmi:
- l'eau,
- les alcools,
- les acides organiques et inorganiques,
- les amines primaires ou secondaires de formule RNH₂ ou R₂NH, dans lesquelles R est un groupe alkyle ou aryle,
- les sels d'ammonium quaternaire de formule (RₚNH⁺₄₋ₚ)_{q}(X^{q-}), dans laquelle p est 1, 2 ou 3, n est 1 ou 2, R est un groupe alkyle et X est un contre-anion comme un atome d'halogène, un groupe SO₄²⁻, HSO₄⁻, CO₃²⁻, HCO₃⁻ ou B(phényl)4⁻.

4. Procédé suivant l'une quelconque des revendications 1 ou 2, dans lequel le composé ayant un atome d'halogène réactif est choisi parmi les chlorures de formule R'₃SiCl, R'₃GeCl ou R'₃SnCl dans laquelle R' est un groupe alkyle.

5. Procédé suivant l'une quelconque des revendications 1 ou 2, dans lequel l'agent de décomposition est utilisé selon un rapport molaire avec le métal de l'isomère indésiré de métallocène supérieur à 1:1.

6. Procédé suivant l'une quelconque des revendications 1 ou 2, dans lequel le composé métallocène est choisi parmi ceux de formule (I): 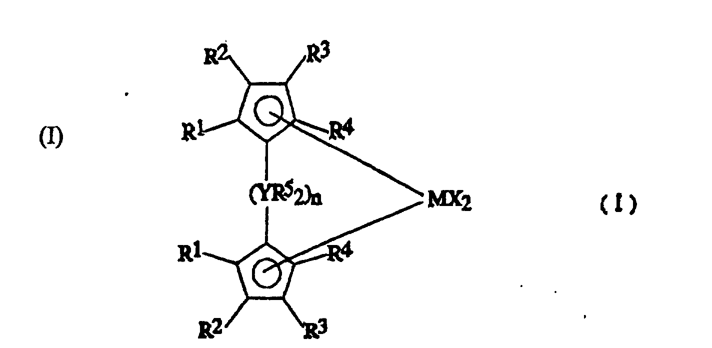 dans laquelle :
M est un métal choisi parmi Ti, Zr et Hf ;
les substituants X, identiques ou différents, sont des atomes d'hydrogène, des atomes d'halogène ou des groupes R, OR, SR, NR₂ ou PR₂, dans lesquels les substituants R sont des groupes alkyle en C₁₋₂₀, cycloalkyle en C₃₋₂₀, alcényle en C₂₋₂₀, aryle en C₆₋₂₀, alkylaryle en C₇₋₂₀ ou arylalkyle en C₇₋₂₀ qui peuvent contenir des atomes de silicium ou de germanium ;
sur chaque groupe cyclopentadiényle, les substituants R¹, R², R³ et R⁴, identiques ou différents, sont des groupes alkyle en C₁₋₂₀, des groupes cycloalkyle en C₃₋₂₀, des groupes alcényle en C₂₋₂₀, des groupes aryle en C₆₋₂₀, des groupes alkylaryle en C₇₋₂₀ ou des groupes arylalkyle en C₇₋₂₀ et peuvent contenir des atomes de silicium ou de germanium, et de plus, deux des substituants R¹, R², R³ et R⁴ adjacents sur le même cycle cyclopentadiényle peuvent former un cycle comprenant de 5 à 8 atomes de carbone, à la condition que dans au moins l'un des groupes cyclopentadiényle, R¹ soit différent de R⁴ ou R² soit différent de R³ ;
Y est un atome de carbone, de silicium ou de germanium ;
les substituants R⁵, identiques ou différents, sont des atomes d'hydrogène, des groupes alkyle en C₁₋₂₀, des groupes cycloalkyle en C₃₋₂₀, des groupes alcényle en C₂₋₂₀, des groupes aryle en C₆₋₂₀, des groupes alkylaryle en C₇₋₂₀ ou des groupes arylalkyle en C₇₋₂₀, et de plus, deux substituants R⁵ peuvent former un cycle comprenant de 4 à 8 atomes de carbone ;
n est un entier compris entre 1 et 4, de préférence n est 1 ou 2.

7. Procédé suivant la revendication 6, dans lequel le composé métallocène est choisi parmi ceux de formule (II): 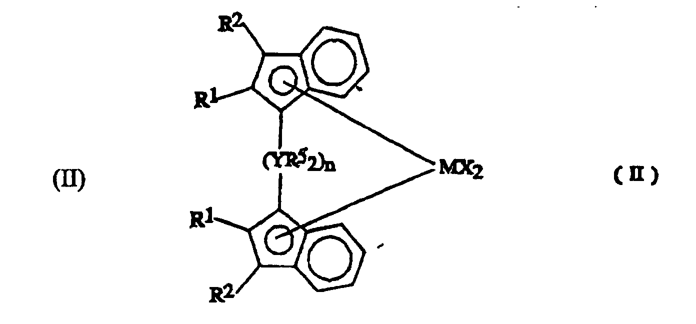 et les composés bis-4,5,6,7-tétrahydroindényle correspondants, dans laquelle R¹, R², R⁵, Y, n, M et X sont tels que définis dans la revendication 6, et les noyaux à six atomes de carbone des ligands indényle peuvent être éventuellement substitués.

8. Procédé suivant l'une quelconque des revendications 6 ou 7, dans lequel, dans les composés métallocène des formules (I) ou (II), M est Zr, les substituants X sont des atomes de chlore ou des groupes méthyle, le groupe de pontage (YR⁵₂)ₙ est un groupe CR⁵₂, SiR⁵₂ ou (CR⁵₂)₂, de préférence un groupe CH₂, C(CH₃)₂, Si(CH₃)₂ ou (CH₂)₂.

9. Procédé pour la préparation du dichlorure d'éthylène bis-(4,7-diméthyl-indényl)-zirconium sous sa forme isomère méso pratiquement pure, ledit procédé comprenant la mise en contact d'un mélange isomère rac/méso dudit métallocène avec un agent de décomposition choisi parmi les composés ayant soit un atome d'hydrogène acide, soit un atome d'halogène réactif pendant un temps suffisant pour décomposer substantiellement la totalité de l'isomère racémique.

10. Procédé suivant l'une quelconque des revendications précédentes, dans lequel l'agent de décomposition est un chlorure de silyle, de germyle ou de stannyle de formule R'₃SiCl, R'₃GeCl ou R'₃SnCl, dans laquelle R' est un groupe alkyle, qui est généré par la réaction d'un ligand silyle- substitué par un germyle- ou stannyle- du métallocène cible avec un composé de métal de transition de formule MX₄, dans laquelle M est un atome de titane, de zirconium ou de hafnium, de préférence un atome de zirconium, et X est un atome d'halogène, de préférence un atome de chlore.
